# EUROPEAN PATENT SPECIFICATION

(11) **EP 0 801 356 B1**
(45) Date of publication and mention of the grant of the patent: **06.10.2004**
(21) Application number: 97105956.3
(22) Date of filing: 10.04.1997
(51) Int. Cl.: G06K 7/08

(54) **Method and apparatus for reading magnetic ink characters**
Verfahren und Vorrichtung zum Lesen von Zeichen aus magnetischer Tinte
Méthode et dispositif pour la lecture de caractères à encre magnétique

(30) Priority: 10.04.1996 JP 8844896
(43) Date of publication of application: 15.10.1997
(73) Proprietor: SEIKO EPSON CORPORATION, Shinjuku-ku, Tokyo 163-0811 (JP)
(72) Inventor: Komatsu, Kenji, Suwa-shi, Nagano-ken (JP)
(74) Representative: Hoffmann, Eckart, Dipl.-Ing.

(56) References cited:
- FR-A- 2 438 301
- PATENT ABSTRACTS OF JAPAN vol. 16, no. 243 (P-1364), 4 June 1992 & JP 04 052988 A (PFU LTD)
- PATENT ABSTRACTS OF JAPAN vol. 6, no. 27 (P-102), 17 February 1982 & JP 56 145467 A (ITO SADAO), 12 November 1981,

## Description

The invention relates to a method of reading magnetic ink characters or similar patterns formed on a sheet or card like carrier medium. The invention further relates to a device for performing the method and to a printing apparatus using the device.

Magnetic ink characters (MICs) according to the MICR (Magnetic Ink Character Recognition) Standard are widely employed by financial institutions to provide machine and human readable information on carrier media such as checks and various other kinds of forms or documents used in financial transactions. MICR readers are used to read and recognize MICs thereby to discriminate checks and other forms in automated tabulation and document processing. In addition to cash and credit cards, personal checks are widely used for shopping as well as paying bills. The customer's account number, check serial number, routing information and other information is typically printed on the face of such checks using MICs. This information can then be read by a machine to determine check validity, for example.

This has led to the use of MICR reading devices in retail store point-of-sale (POS) stations and check-out counters. POS stations, check-out counters etc. typically also use printing devices for printing customer receipts etc. and also for printing endorsements on the checks. To avoid the handling problems involved in the use of separate devices for MICR reading on the one hand and printing on the other hand, devices combining both functions in one unit have been developed. A device of this type is disclosed in EP-A-0 707 971 and shown in Figs. 1 and 2. The term "MICR printer" as used hereinafter in this text refers to such a device which is capable of printing as well as of reading (and recognizing) MICR information and may or may not be capable of printing MICs.

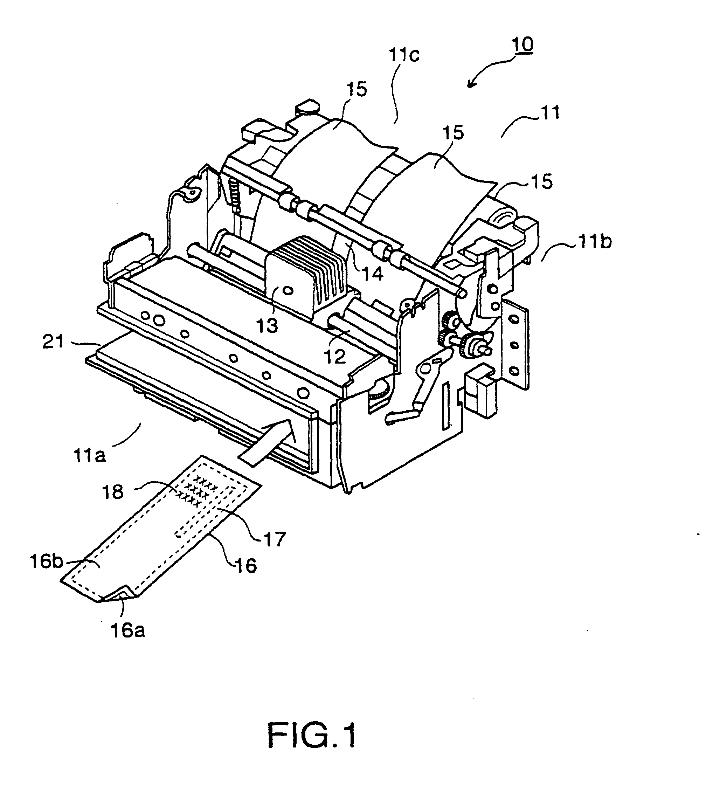

The MICR printer shown in FIG. 1 incorporates an MICR reader function into a printer that holds two rolls of paper, one for journal printing and the other one for receipt printing. Additionally, the MICR printer can print to single slip forms. This type of printer is a compact, high functionality device that can automatically handle the multiple operations from MICR reading to endorsement printing required to process a personal check or the like. This makes such MICR printers suited for use in POS stations, and they are expected to be widely used in stores, hotels, and other commercial establishments.

A problem still to be solved in such compact, multiple function device is the influence of magnetic noise on MICR reading, mainly the influence of magnetic noise generated by the drive motor used for moving the MICs past a magnetic head, i.e., for scanning the MICs. To keep the cost of a multiple function device low it is preferable to have different functions share device components such as a drive motor etc.. A pulse motor, which by its nature produces a substantial amount of magnetic noise, is typically employed as the drive source for transport mechanisms in a printer. A pulse motor allows easy and precise control of the transport mechanism and, thus, the printing position. If such pulse motor is also used for transporting the personal check past the magnetic head while reading the MICs the magnetic noise from the pulse motor, thus, tends to affect the accuracy of MICR reading thereby reducing the recognition rate. In dedicated MICR readers having only an MICR reading function and in large-capacity MICR readers conventionally used by financial institutions problems due to such magnetic noise can easily be avoided by assuring a sufficient distance between the magnetic head and the drive motor . Alternatively, a dc motor, which produces relatively little magnetic noise can be used as the drive motor. In compact, multiple function devices, however, it is difficult to obtain a sufficient distance between the motor and the magnetic head. Providing a separate motor and drive system only for MICR reading increases the size and weight of the device as well as the complexity of its control circuitry and the total cost. While such magnetic noise can be reduced by providing a magnetic shield between the pulse motor and the magnetic head, in a compact MICR printer, the magnetic noise leaking through the shield still presents a problem. This is the more so, since the condition of MICs printed on personal checks can vary as a result of soiling, folds, etc., and noise during reading must, therefore, be suppressed as much as possible in order achieve a high recognition rate.

An object of the present invention is therefore to provide a method of reading MICs or similar patterns, which is relatively insusceptible to magnetic noise from a drive motor used for scanning the MICs by means of a magnetic head. Another object of the invention is to provide a device for performing the method. Still another object of the invention is to provide a compact apparatus for both printing and MICR reading which has a high MIC recognition rate.

These objects are achieved with a method as claimed in claim 1, a device as claimed in claim 6 and an apparatus using the device as claimed in claim 11. Preferred embodiments of the invention are subject-matter of the dependent claims.

To achieve the above objects, the present invention obtains and stores the output signal of the magnetic head as first signals while the transport mechanism provided for scanning the MICs is operating but MICs are not yet placed in front of the magnetic head. In this way the first signals represent the background magnetic noise obtained under substantially the same conditions as those under which, subsequently, reading of MICs is performed to obtain second signals representing the MICs with a magnetic noise component superposed. The first signals are stored and then subtracted from the second signals, thereby to remove the magnetic noise component from the second signals. Since the magnetic noise component generated by the pulse motor is periodic it is preferable to obtain the first signals synchronized with the noise component's period and to subtract from each second signal the corresponding first signal obtained at a comparable timing within that period. Each first signal and each second signal may be the average of a certain number of respective samples obtained at a corresponding number of successive time instants within the noise component's period. Since, in addition to the periodic noise component, aperiodic or statistic noise is likely to occur it is even more preferable to obtain for each of a plurality of those periods a certain number of first signals (or average values) at respective time instants within each period. The first signals (or average values) related to corresponding time instants in the plurality of periods are likely to show a certain dispersion around a center value due to statistic magnetic noise superposed to the periodic magnetic noise. By taking this center value or the average of a certain number of values around the center value as representative of the first signal (or average value) at the respective time instant to be subtracted it from the corresponding second signal (or average value) statistic noise can be excluded from influencing the measurement result for the periodic magnetic noise component. This ensures not only that the noise component in the second signal is caused by exactly the same condition of the pulse motor for which the corresponding first signal was obtained but furthermore avoids non-periodic fluctuations in the measured noise component.

With reference to the accompanying drawings, a preferred embodiment of the present invention will be described below as being applied to the MICR printer disclosed in EP-A-0 707 971. It is to be noted, however, that the invention can be applied to devices other than MICR printers.
- FIG. 1: is schematic perspective view of a prior art MICR printer to which the present invention can be applied,
- FIG. 2a: shows, schematically, the cross sectional view of a paper path in the apparatus of FIG. 1,
- FIG. 2b: is a schematic cross sectional view showing a pulse motor mounted in a magnetic shielding,
- FIG. 3: is a block diagram of a device for MICR reading and recognition according to the present invention,
- FIG. 4: is a flow chart illustrating the method according to the invention executed by the device shown in FIG. 3,
- FIG. 5a: is a flow chart illustrating in more detail a first subroutine represented by step 71 in FIG. 3.
- FIG. 5b: is a flow chart illustrating in more detail a second subroutine represented by step 77 in FIG. 3.
- FIG. 6: is a graph showing an example of a waveform obtained from the magnetic head without noise compensation.
- FIG. 7: is a graph similar to that in FIG. 6 showing the effects of noise compensation according to the invention.

Since the general structure and operation of MICR printer 10 shown in FIG. 1 is known, only those of its elements that are deemed necessary for an easy and complete understanding of the invention will be described here while, for further details, reference is made to EP-A-0 707 971.

MICR printer 10 comprises a frame or main body 11. A print head 13 is mounted on a guide shaft 12 for a reciprocative motion between the left hand and the right hand side of main body 11. At its rear part 11b main body 11 is arranged to hold two rolls of roll paper 15a and 15b, respectively; one, for example, for printing receipts for customers and the other one for printing a sales journal for record-keeping purposes. An insertion opening 21 is provided at the bottom part on the main body's front side 11a. A slip form 16 can be inserted into insertion opening 21. Print head 13 can print on either roll paper 15a, roll paper 15b or slip form 16 if one has been inserted. Transport mechanisms are provided for achieving a two dimensional relative motion between print head 13 and the paper (15a, 15b, 16) to be printed. A head transport mechanism comprising a pulse motor and a timing belt (not shown) moves print head 13 along guide shaft 12. A paper transport mechanism advances the paper 15a, 15b or the slip form 16 perpendicularly to the direction of the print head's movement. Print head 13 in this example is an impact type wire dot print head. Printing is accomplished by driving the wires in the print head 13 via an ink ribbon (not shown) against the paper backed by a platen 14. It is to be noted that the type of print head is not critical to the present invention and types other than a wire dot print head, such as an ink jet head, may be used.

As mentioned above, MICR printer 10 can also process slip forms 16. A slip form 16 is inserted through insertion opening 21 into a paper path 20 described below, is transported to pass between print head 13 and platen 14 to be printed and is then ejected at the top side 11c of main body 11. The term "slip form" is used herein in a broad sense including but not restricted to all kinds of forms used in financial transactions and accounting purposes, such as personal checks, ledger forms, receipts and others. Since the invention is mainly concerned with the MICR aspect of the MICR printer, in the following, reference will be made only to a personal check (also referred to simply as "check") as one example of a slip form or carrier medium carrying MICs. Personal checks are checks written by individuals to pay for store purchases and issued by banks or other financial institutions. MICs 17 representing the user's account number, check serial number, and/or other information are printed on face 16a of the personal check.

The form and quality of MICs, as well as the position at which they are printed on each check are standardized. MICs can, therefore, be read by scanning this particular area of the check with a magnetic head. The printed data can then be identified (recognized) by analyzing the waveform output from the magnetic head. The payment amount and account holder signature are also written on face 16a of check 16. When the check is received by store personnel, check validity is confirmed based on the data printed in MICs, and valid checks are then endorsed, i.e., an endorsement 18 containing the date the check was received, the store name, account number, amount and/or other information is printed on back 16b of check 16. To enable the endorsement printing using print head 13 in MICR printer 10, check 16 is inserted upside down into insertion opening 21, i.e., face 16a down and back 16b up. This means that check 16 is inserted into insertion opening 21 with MICs 17 facing down along the right side of MICR printer 10.

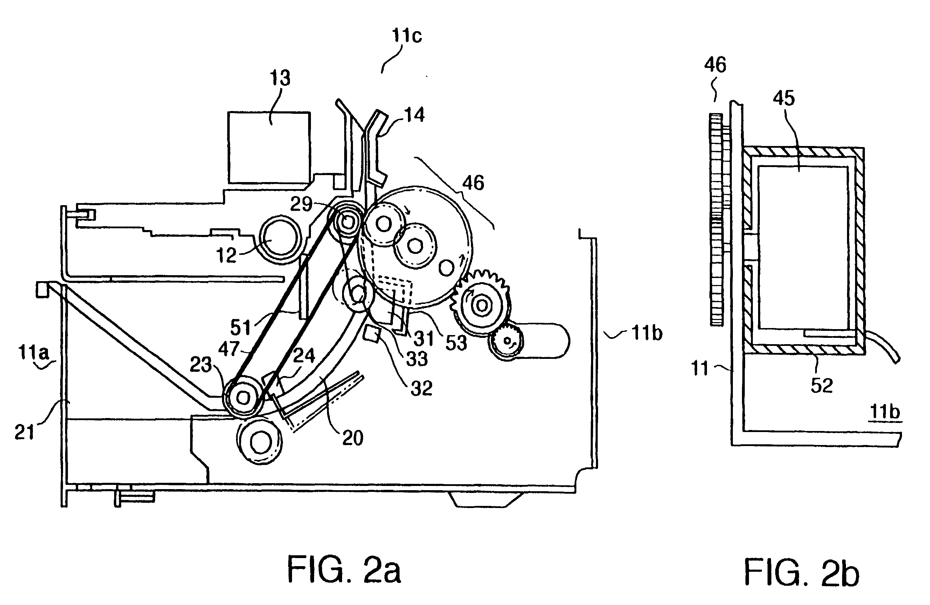

The paper path 20 of MICR printer 10 is shown in cross section in FIG. 2a. Roll paper 15a, 15b is fed from the respective paper roll behind platen 14 to the gap between platen 14 and print head 13 and printed. A transport roller (not shown) for transporting roll paper 15a, 15b is driven by pulse motor 45 via gear set 46. Check 16 (or other slip form) is transported from insertion opening 21 through paper path 20 to the gap between platen 14 and print head 13. Check 16 is engaged by loading roller 23 and transport roller 29 which are both driven by pulse motor 45 via gear set 46 and drive belt 47 so as to transport check 16 either forward or backward along paper path 20. Pulse motor 45 which is the drive source for the paper transport mechanisms, is selectively connected by means of a selection mechanism comprising plungers or other means to either the mechanism for transporting roll paper 15a, 15b or the mechanism for transporting check 16. Loading roller 23, paper detector 24, magnet 32 (if required), and magnetic head 31 are disposed in sequence along paper path 20. When personal check 16 is inserted into insertion opening 21 it is first engaged and advanced by loading roller 23. Having been advanced by a length corresponding to the distance between rollers 23 and 29, check 16 is then engaged by both loading roller 23 and transport roller 29, and its MIC area is transported past magnetic head 31 and scanned. Printing starts after personal check 16 is advanced from transport roller 29 to platen 14.

When check 16 is advanced through paper path 20 the MIC area first passes over magnet 32. Magnet 32 is disposed to face face 16a of check 16, and used to remagnetize the magnetic ink of the MICs. Check 16 then passes over magnetic head 31 and magnetic head 31 reads the MICs. MICR printer 10 comprises a head presser 33 disposed opposite magnetic head 31 on the other side of paper path 20. Head presser 33 is used to press face 16a of check 16 against magnetic head 31 as the check passes magnetic head 31. The intimate contact between face 16a and magnetic head 31 enables the MICs to be read more easily without error. Incidentally, instead of remagnetizing the magnetic ink using magnet 32 an auto-bias magnetic head 31 can be used, in which case magnet 32 is not needed.

In MICR printer 10 both MICR reading and printing can be executed as check 16 is transported through a single paper path, i.e., reading MICs on face 16a of personal check 16 and printing data to personal check 16, particularly printing endorsement 18, can be accomplished in a continuous series of sequential operations.

To simplify the construction and control, reduce the size and provide an MICR printer at low cost, MICR printer 10 uses the same paper transport mechanism for transporting check 16 past magnetic head 31 for MICR reading and past print head 13 for printing. The preferred transportation speed during printing is 70-90 mm/sec. Faster speeds can cause the printing position to fluctuate, thus either degrading print quality or incurring higher cost for a mechanism able to assure sufficient precision in stopping the paper. On the other hand, in current MICR readers in which MICs are scanned with a magnetic head, the preferred transportation or scanning speed yielding a specified recognition rate is approximately 100 mm/sec, with some variation depending on the MICR data format and detection characteristics of the magnetic head being possible. MICR printer 10 achieves these different speeds for MICR reading on the one hand and printing on the other hand by changing the speed of pulse motor 45. The particular way of how the speed is adapted is not critical to the invention. The speed reduction ratio of the gear set could be changed instead, for instance. Changing the speed of pulse motor 45 is preferable as a means of simplifying the mechanism and achieving a compact, low-cost, MICR printer.

To achieve a reliable MIC recognition it is important to minimize magnetic noise which might affect the results of reading the MICs by magnetic head 31. Magnetic fields of variable strength and orientation leaking from the pulse motors in MICR printer 10 can particularly become sources of magnetic noise. Therefore, in MICR printer 10 of the present embodiment all motors other than pulse motor 45 used for transporting check 16 during MIC reading are stopped. Furthermore, the sides and the bottom of pulse motor 45 are covered with a magnetic shield 52 as shown in FIG. 2b to minimize magnetic leakage. Magnetic head 31 is also covered on its rear side with shield plate 53, and another shield plate 51 is disposed in front of magnetic head 31 to reduce magnetic noise transferred by such as the motor shaft and frame parts etc.. While these measures have proven to substantially enhance MIC recognition reliability, they turned out not always to be sufficient.

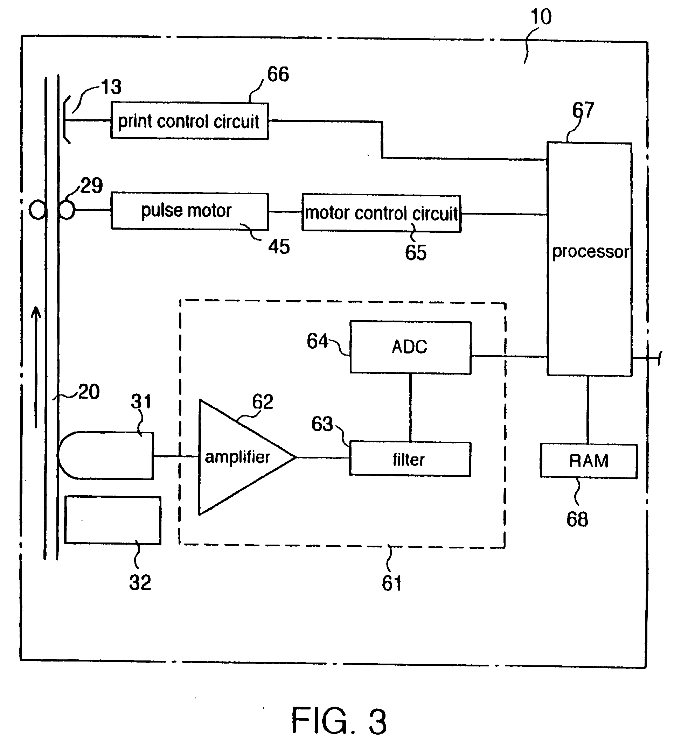

In accordance with the present invention, additional measures are taken to further reduce the effects of magnetic noise and assure a high MIC recognition rate. FIG. 3 is a block diagram of a device used for MICR processing according to one embodiment of the invention.

Referring to FIG. 3, magnetic head 31, while scanning face 16a of check 16, reads MICs by detecting changes in magnetic flux density and outputs a corresponding detection signal. The detection signal is applied to an MICR detection circuit 61. MICR detection circuit 61 comprises amplifier 62 for amplifying the minute voltage changes of the detection signal, filter 63 for removing various noise components and extraneous signals resulting from MIC printing defects, and A/D converter 64 for A/D converting the analog signal from filter 63 into digital detection data which are applied to processor 67. Processor 67 performs noise reduction and recognition processing on these data as will be explained in more detail below. Processor 67 also controls the paper transport mechanism, including transport roller 29, and supplies drive pulses via motor control circuit 65 to pulse motor 45, thereby controlling the speed and rotary position of pulse motor 45. Processor 67 also controls print head 13 via print control circuit 66.

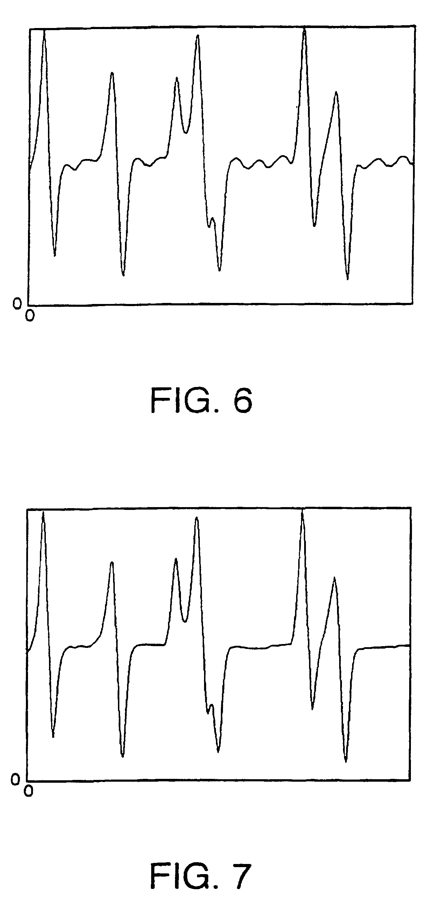

Filter circuit 63 is designed according to the MICR standard to remove extraneous signals from the detection signal using a cut-off frequency determined by the check transportation speed and the length of gaps in the MIC string. In addition to magnetic flux density changes caused by MICs magnetized by permanent magnet 32, magnetic head 31 responds to magnetic noise, i.e., magnetic flux density changes mainly caused by phase changes in pulse motor 45. Voltage changes resulting from this magnetic noise are, therefore, included in the detection signal and also amplified, A/D converted and output to processor 67. As a result, a periodic noise component synchronized with the phase changes of pulse motor 45 is superimposed to the useful signal, i.e., the MICR signal. FIG. 6 shows such noisy MICR signal obtained from reading the MIC string "234". To remove the effects of such magnetic noise in accordance with the present invention, the detection signal from magnetic head 31 is started to be processed before the MIC region of check 16 reaches the magnetic head. At this time, since there are no MICs to be detected by magnetic head 31, the detection signal represents the noise component only. In this way, the noise component can be measured separately and used later to remove the noise component from the noisy MICR signal.

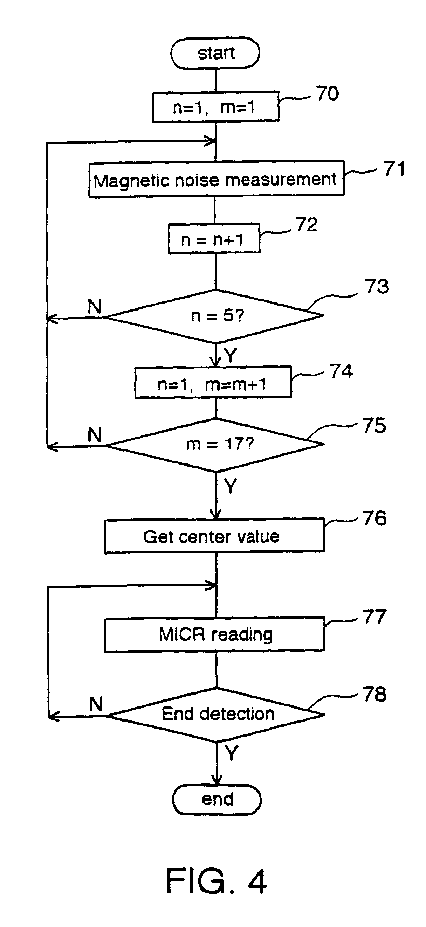

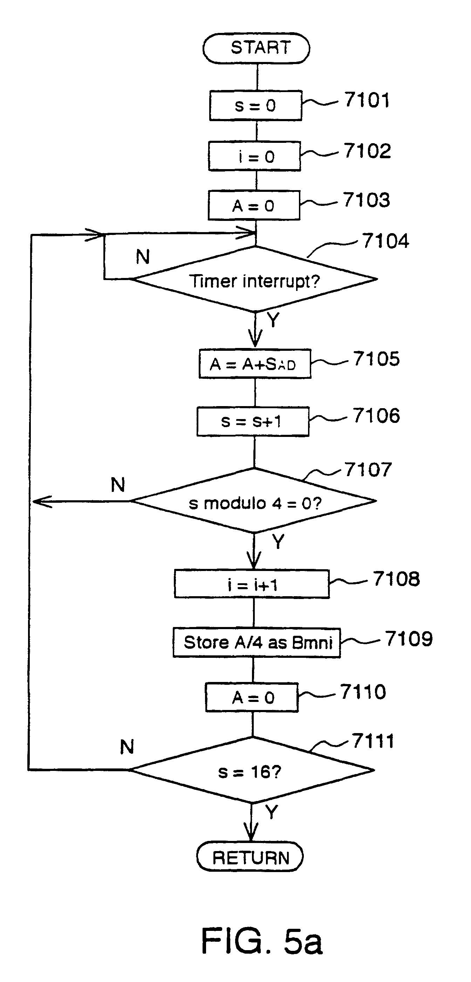

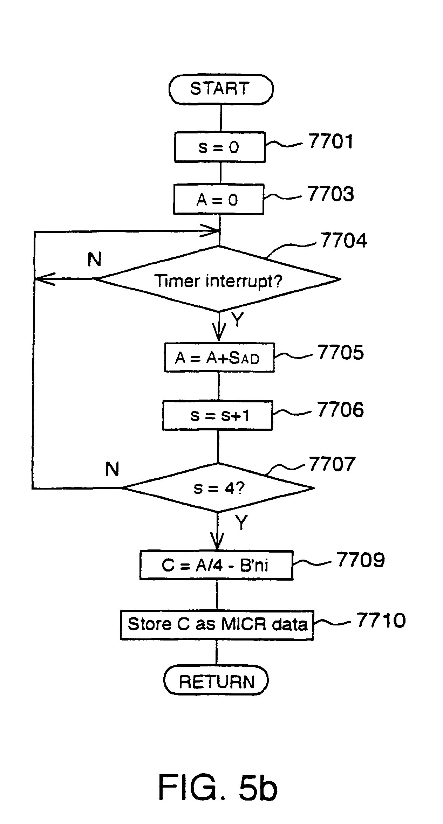

The method according to the present invention is described in detail with reference to the flow charts in FIG. 4 and FIG. 5a and 5b. Referring first to FIG. 4, the detection data output from MICR detection circuit 61 while magnetic head 31 scans an area of check 16 with no MICs therein are sampled first (step 71). Count variables m and n are both initialized to one in step 70; they will be explained later. The details of a first subroutine represented by step 71 are shown in greater detail in FIG. 5a. It is to be noted that, for measuring the noise component, the magnetic head need not necessarily scan an area of check 16 with no MICs provided therein. For instance, if in a particular case the area of check 16 containing MICs is right at the leading edge of the check, the noise component may be measured before the leading edge of check 16 reaches the position of magnetic head 31.

Referring now to FIG. 5a, in the steps 7101, 7102 and 7103 of the first subroutine count variables s and i and a variable A are each initialized to zero. Step 7104 is a waiting step waiting for a timer interrupt. This timer interrupt is a periodic interrupt used for various operations, including a pulse motor phase change. Pulse motor 45 of this embodiment is assumed to be a two-phase pulse motor controlled by two-phase excitation. Processor 67 thus controls rotation of pulse motor 45 by sequentially applying four different excitation patterns to motor control circuit 65. Each excitation pattern may be regarded as one drive pulse applied to the motor. The magnetic noise generated by a pulse motor is periodic with a certain number n of such drive pulses. A sequence of n drive pulses is defined as a drive cycle and corresponds to the period of the periodic magnetic noise generated by the pulse motor. Depending on the particular structure of a pulse motor such drive cycle may or may not correspond to one revolution of the motor. In the present embodiment a drive cycle includes four drive pulses and corresponds to one revolution of the motor. Sampling of the detection data synchronized to the drive pulses is possible by using the timer interrupt as a sampling signal. Thus, whenever a timer interrupt is detected in step 7104, processor 67 samples the digital value currently output from A/D converter 64 to obtain a sample value S_{AD} and adds this sample value to the variable A initialized in step 7103 (step 7105). In this embodiment, every 16 timer interrupts another drive pulse is applied to the pulse motor, i.e., the excitation pattern is changed. This means that for each drive pulse 16 sample values S_{AD} are obtained from A/D converter 64. The average of each sequence of four sample values is calculated and used as one detection value. Four detection values are thus obtained for each drive pulse. It should be noted that it is not always necessary to take the average of four samples. Instead, the sample values themselves could be used as detection values. Also, the number of timer interrupts generated during one drive pulse need not necessarily be sixteen.

Step 7106 increments the count variable s thereby to count the number of sample values taken, i.e., the number of timer interrupts. Step 7107 checks whether the value of s is an integer multiple of 4. If not, the processing returns to step 7104 to wait for the next timer interrupt. Otherwise, i is incremented in step 7108, and in step 7109 the variable A is divided by 4 and the result is stored as detection value Bₘₙᵢ. Index i denotes the number of the detection value within a drive pulse, i.e., 1 ≤ i ≤ 4. Index n denotes the number of the respective drive pulse within a drive cycle, i.e., 1 ≤ n ≤ 4. Index m denotes the number of drive cycles. The reason for using index m will be explained below. While in this embodiment the average value is taken as the arithmetic mean value, the square root mean value could be used instead. In step 7110 A is reset to zero. Step 7111 checks whether s equals 16, i.e., whether or not 16 sample values have been taken. If s equals 16 it means that the end of the current drive pulse has been reached because the next drive pulse is applied in response to the sixteenth timer interrupt. If s has not reached 16 yet the process loops back to step 7104 to wait for the next timer interrupt. Otherwise, the subroutine ends and the process returns to the main routine in FIG. 4. As will be understood, when the subroutine returns, four detection values Bₘₙ₁ to Bₘₙ₄ have been obtained and stored in RAM 68.

Returning to FIG. 4, step 72 increments n and step 73 checks whether n = 5, i.e., whether the subroutine of FIG. 5a has been executed for four successive drive pulses. If not, the process loops back to step 71 while, otherwise, n is reset to one and m is incremented in step 74 indicating that a drive cycle has been completed. Step 75 checks whether m = 17, i.e., whether sixteen drive cycles have been completed. If not, the process loops back to step 71. Otherwise, a total of 256 detection values have been stored, four detection values for each of four drive pulses in each of sixteen drive cycles. Step 76 selects 64 center values from these 256 detection values stored. Magnetic noise from sources other than the pulse motor, including magnetic dust on the rollers, can also occur. Such magnetic noise is not periodic but rather aperiodic or statistic. The magnetic noise measurement is performed through sixteen drive cycles to avoid such aperiodic noise influencing the measurement result for the periodic magnetic noise component. If simply the average were taken over the sixteen drive cycles aperiodic or statistic magnetic noise would be likely to still have an influence. Therefore, a preferred embodiment of the invention groups the 256 detection values in 64 groups each group including all detection values of m = 1 to 16 having the same values of n and i. In other words, all detection values in a particular group correspond to the same time period (group of timer interrupts as represented by i, and sequence number of drive pulse as represented by n) of the respective one of the sixteen drive cycles. The detection values in each group are likely to show a certain dispersion around a center value due to the statistic noise mentioned above. This center value, i.e., the value of the highest frequency, is selected as a noise compensation value B'ₙᵢ from each group. As a result, 64 compensation values representing four values in each of four drive pulses of one drive cycle are obtained to thereby substantially eliminate the effects of any aperiodic or statistic noise. It is to be noted that taking the value of highest frequency as the center value is one possibility to exclude abnormal or "freak values". Another possibility is, for instance, to cut off a certain number of values at both edges of the dispersion and to take the average of the remaining values as a quasi-center value. The term "center value" as used in this specification is intended to include such a quasi-center value. It will be further appreciated by those skilled in the art that the numbers 4, 4, 16 (average of four sample values, four drive pulses per drive cycle and sixteen drive cycles) are related to the particular embodiment and are not critical to the invention.

The area of check 16 containing MICs is then advanced to magnetic head 31 and reading and noise compensation is performed in step 77. The details of the second subroutine represented by step 77 are shown in FIG. 5b. Steps 7701 and 7703 to 7706 correspond to steps 7101 and 7103 to 7106, respectively, in FIG. 5a and need not be described again. Step 7707 checks whether s = 4, i.e., whether four sample values have been accumulated in variable A. If not, the process returns to step 7704 waiting for the next timer interrupt. Otherwise, A is divided by 4 in step 7709, i.e., the average of four sample values resulting from reading the MIC pattern is calculated. Compensation value B'ₙᵢ is subtracted from this average value. Remember B'ₙᵢ is the selected one of the noise detection values previously obtained for the same time period (represented by n and i) with respect to one drive cycle as the current average value A/4. It is to be noted that, although not shown in the drawing, while reading the MICs processor 67 keeps track of the sequence numbers of the average value A/4 and the drive pulse within each drive cycle, i.e., sequence numbers corresponding to n and i as defined above for the first subroutine. Processor 67 uses these sequence numbers to retrieve the associated B'ₙᵢ from RAM 68. By the subtraction the magnetic noise component is removed. The resulting value C is stored in step 7710 in RAM 68. Returning to FIG. 4, step 77 is repeated until no more MICs are detected (step 78). The respective values C thus obtained and stored represent substantially noise free MICR data used in a subsequent recognition process which itself may be conventional and is not subject of the present invention. The detection in step 78 may be based on either the length of the MICR area on check 16 or the MICR data. In the first case a predetermined number of drive pulses corresponding to the length of the MICR area is counted while in the second case the end of the detection is determined after a certain number of successive MICR data C are zero or below a certain threshold value indicating that the magnetic head detects magnetic noise only.

In MICR printer 10 as thus described, pulse motor 45 is driven for magnetic noise measurement under the same conditions used for MICR reading. For the magnetic noise measurement magnetic head 31 either scans an area of check 16 not containing MICs or does not scan anything, i.e., the detection signal from the head is sampled before the leading edge of check 16 arrives at the position of magnetic head 31. By the compensation process explained above, the effects of periodic magnetic noise mainly caused by pulse motor 45 can be removed as shown in FIG. 7. FIG. 7 shows the same waveform as FIG. 6 obtained, however, by using the method and device according to the invention as described hereinabove.

Moreover, the effects of statistic magnetic noise can also be removed by obtaining the compensation values as the "center values" over a period of plural drive cycles of pulse motor 45 corresponding to plural periods of the periodic magnetic noise. These compensation values can then be used for repeated compensation during the subsequent MICR reading.

Magnetic noise is preferably measured immediately before MICR reading in every MICR process. As a result, magnetic noise data reflecting the current pulse motor condition and the operating environment of MICR printer 10 can be obtained to ensure that the noise compensation always reflects the actual conditions. The MIC recognition rate can therefore be further improved.

By thus removing magnetic noise from the result of MICR reading synchronized to the pulse motor operation, the effects of periodic magnetic noise from the pulse motor, for example, can be substantially eliminated. In combination with magnetic shielding as described above for a preferred embodiment of the invention, the effects of the pulse motor can be substantially eliminated. As a result, a high MIC recognition rate can be achieved even in a compact multiple function apparatus in which sufficient distance from the pulse motor to the magnetic head cannot be obtained and which uses a single pulse motor for plural functions.

Because the effects of magnetic noise from the pulse motor can be substantially eliminated by using the method and device of the present embodiment, a sufficient MIC recognition rate can be achieved in even smaller multiple function apparatuses in which a magnetic shielding cannot be disposed.

It should be noted that while the present invention has been described using by way of example an MICR printer capable of processing personal checks printed with MICR characters, it will be obvious that the invention can also be used in magnetic card readers and other devices recognizing MICs or similar magnetic patterns. Furthermore, the effects of magnetic noise caused by the pulse motor can also be removed and the magnetic pattern recognition rate can be improved by applying the same method as described above in devices in which the magnetic head is moved by the pulse motor across the magnetic pattern.

## Claims

1. A method of reading magnetic ink characters or similar patterns provided in a predetermined area on a carrier medium, the method comprising the steps of:
(a) applying drive pulses to a pulse motor (45) for causing a scanning motion of said carrier medium relative to a magnetic head (31),
(b) obtaining and storing, as respective first sample signals, the output signal from the magnetic head at predetermined time instants during said scanning motion while said magnetic head (31) is outside of said predetermined area,
(c) subsequently obtaining, as respective second sample signals, the output signal from the magnetic head at predetermined time instants during said scanning motion while said magnetic head (31) is inside said predetermined area, and
(d) subtracting from each second sample signal obtained in step (c) the corresponding first sample signal stored in step (b) and outputting the respective differences as a magnetic pattern recognition signal.

2. The method according to claim 1 wherein said predetermined time instants both in steps (b) and (c) are synchronized with said drive pulses.

3. The method according to claim 2 wherein step (b) comprises obtaining and storing said first sample signals for a predetermined first number (i) of said predetermined time instants within and synchronized to each of a predetermined second number (n) of drive pulses, said second number of drive pulses representing a drive cycle of said pulse motor (45) corresponding to one period of periodic magnetic noise generated by said pulse motor.

4. The method according to claim 3 wherein step (b) comprises calculating from each group of a predetermined third number of successively obtained first sample signals a respective first average value (Bₘₙᵢ) and storing the first average values instead of said first sample signals, step (c) comprises calculating from each group of a number of successively obtained second sample signals equal to said third number a respective second average value (A/4), and step (d) comprises subtracting from each second average value the corresponding first average value and outputting the respective differences as said magnetic pattern recognition signal.

5. The method according to claim 3 or 4 wherein step (b) comprises obtaining and storing said first sample signals or said average values for a predetermined fourth number (m) of said drive cycles, grouping the thus obtained first sample signals or first average values into a number of groups such that each group includes all of said first sample signals obtained for corresponding time instants in each of said drive cycles or all of said first average values (B₁ₙᵢ - Bₘₙᵢ) obtained for the corresponding time instants represented by said first average values in each of said drive cycles, and selecting from each group a center value, the center value being the value of the highest frequency or the average of a certain number of highest frequency values in the group, and step (d) comprises subtracting from each second sample signal or second average value the corresponding center value.

6. A device for performing the method defined in any one of the preceding claims, comprising:
a magnetic head (31),
drive means (23, 29, 45, 46, 47) for moving a carrier medium (16) relative to the magnetic head, said carrier medium carrying magnetic ink characters of similar patterns in a predetermined area thereof and said drive means having a pulse motor (45) as a drive source,
means (66, 67) for applying drive pulses to said pulse motor (45),
sampling means (62-64, 67) for obtaining, as sample signals, the output signal of said magnetic head (31) at predetermined time instants,
distinction means (67) for classifying said sample signals into first and second sample signals, said first sample signals representing a respective output signal of said magnetic head (31) obtained while said magnetic head is outside of said predetermined area, while said second sample signals represent a respective output signal of said magnetic head obtained while said magnetic head is inside said predetermined area,
storage means (67, 68) responsive to said distinction means for storing said first sample signals,
subtraction means (67) for subtracting from each second signal a respective first sample signal obtained for an equivalent time instant, and
output means (67) for outputting the differences obtained from said subtraction means as a magnetic pattern recognition signal.

7. The device according to claim 6 wherein said sampling means (62-64, 67) is adapted to obtain said sample signals at time instants synchronized to said drive pulses.

8. The device according to claim 7 wherein said sampling means (62-64, 67) comprises means for obtaining said sample signals for a predetermined first number (i) of said predetermined time instants within and synchronized to each of a predetermined second number (n) of drive pulses, said second number of drive pulses representing a drive cycle of said pulse motor (45) corresponding to one period of periodic magnetic noise generated by said pulse motor.

9. The device according to claim 8 wherein
said distinction means (67) comprises means for calculating from each group of a predetermined third number of successively obtained first sample signals a respective first average value (Bₘₙᵢ), and means for calculating from each group of a number of successively obtained second sample signals equal to said third number a respective second average value (A/4),
said storage means (67, 68) is means for storing said first average values, and
said subtraction means (67) is means for subtracting from each second average value the corresponding first average value.

10. The device according to claim 9 wherein
said sampling means (62-64, 67) comprises means for obtaining said first sample signals for a predetermined fourth number (m) of said drive cycles,
said distinction means comprises means for grouping the resulting first average values into a number of groups such that each group includes all of said first average values (B₁ₙᵢ - Bₘₙᵢ) obtained for the corresponding time instants represented by said first average values in each of said drive cycles, and for selecting from each group a center value (B'ₙᵢ), the center value being the value of the highest frequency or the average of a certain number of highest frequency values in the group, and
said subtraction means (67) is means for subtracting from each second average value the corresponding center value.

11. An apparatus including the device of any one of claims 6 to 10 and further comprising printing means (13) wherein said drive means (23, 29, 45, 46, 47) is also for transporting said carrier medium (16) to said printing means (13) and said printing means is adapted to print on the carrier medium.

## Patentansprüche

1. Verfahren zum Lesen von Magnetschriftzeichen oder ähnlichen Mustern, die in einem vorherbestimmten Bereich auf einem Trägermedium vorgesehen sind, mit den folgenden Schritten:
(a) Anlegen von Antriebsimpulsen an einen Schrittmotor (45), um eine Abtastbewegung des Trägermediums gegenüber einem Magnetkopf (31) zu veranlassen,
(b) Erhalten des Ausgangssignals vom Magnetkopf zu vorherbestimmten Zeitpunkten während der Abtastbewegung, während sich der Magnetkopf (31) außerhalb des vorherbestimmten Bereichs befindet, und Speichern als jeweilige erste Abtastsignale,
(c) anschließendes Erhalten des Ausgabesignals vom Magnetkopf zu vorherbestimmten Zeitpunkten während der Abtastbewegung, während sich der Magnetkopf (31) innerhalb des vorherbestimmten Bereichs befindet, als jeweilige zweite Abtastsignale, und
(d) Subtrahieren des im Schritt (b) gespeicherten entsprechenden ersten Abtastsignals von jedem im Schritt (c) erhaltenen zweiten Abtastsignal und Ausgeben der jeweiligen Differenzen als ein Magnetmustererkennungssignal.

2. Verfahren nach Anspruch 1, bei dem die vorherbestimmten Zeitpunkte sowohl im Schritt (b) als auch (c) mit den Antriebsimpulsen synchronisiert sind.

3. Verfahren nach Anspruch 2, bei dem der Schritt (b) aufweist, die ersten Abtastsignale für eine vorherbestimmte erste Anzahl (i) der vorherbestimmten Zeitpunkte innerhalb und synchronisiert mit jedem einer zweiten Anzahl (n) von Antriebsimpulsen zu erhalten und zu speichern, wobei die zweite Anzahl Antriebsimpulse einen Antriebszyklus des Schrittmotors (45) entsprechend einer Periode periodischen magnetischen Rauschens wiedergibt, welches von dem Schrittmotor erzeugt wird.

4. Verfahren nach Anspruch 3, bei dem der Schritt (b) aufweist, aus jeder Gruppe einer vorherbestimmten dritten Anzahl aufeinanderfolgend erhaltener erster Abtastsignale einen jeweiligen ersten Durchschnittswert (Bₘₙᵢ) zu berechnen und die ersten Durchschnittswerte anstatt der ersten Abtastsignale zu speichern, der Schritt (c) aufweist, aus jeder Gruppe einer Anzahl aufeinanderfolgend erhaltener zweiter Abtastsignale gleich der dritten Anzahl einen jeweiligen zweiten Durchschnittswert (A/4) zu berechnen, und der Schritt (d) aufweist, von jedem zweiten Durchschnittswert den entsprechenden ersten Durchschnittswert zu subtrahieren und die jeweiligen Differenzen als das Magnetmustererkennungssignal auszugeben.

5. Verfahren nach Anspruch 3 oder 4, bei dem der Schritt (b) aufweist, die ersten Abtastsignale oder die Durchschnittswerte für eine vorherbestimmte vierte Anzahl (m) der Antriebszyklen zu erhalten, die so erhaltenen ersten Abtastsignale oder ersten Durchschnittswerte zu einer Anzahl von Gruppen zu gruppieren, so daß jede Gruppe alle ersten Abtastsignale, die für entsprechende Zeitpunkte in jedem der Antriebszyklen erhalten wurden, oder alle ersten Durchschnittswerte (B₁ₙᵢ-Bₘₙᵢ), die für die entsprechenden Zeitpunkte erhalten wurden, welche von den ersten Durchschnittswerten in jedem der Antriebszyklen repräsentiert werden, umfaßt, und aus jeder Gruppe einen Mittenwert auszuwählen, wobei der Mittenwert der Wert der höchsten Frequenz oder der Durchschnitt einer gewissen Anzahl höchster Frequenzwerte in der Gruppe ist, und der Schritt (d) aufweist, von jedem zweiten Abtastsignal oder zweiten Durchschnittswert den entsprechenden Mittenwert zu subtrahieren.

6. Gerät zum Durchführen des Verfahrens gemäß einem der vorhergehenden Ansprüche, aufweisend:
einen Magnetkopf (31),
eine Antriebseinrichtung (23, 29, 45, 46, 47) zum Bewegen eines Trägermediums (16) relativ zum Magnetkopf, wobei das Trägermedium Magnetschriftzeichen oder ähnliche Muster in einem vorherbestimmten Bereich enthält, und die Antriebseinrichtung einen Schrittmotor (45) als Antriebsquelle besitzt,
eine Einrichtung (66, 67) zum Anlegen von Antriebsimpulsen an den Schrittmotor (45),
eine Abtasteinrichtung (62-64, 67), die als Abtastsignale das Ausgabesignal des Magnetkopfes (31) in vorherbestimmten Zeitpunkten erhält,
eine Unterscheidungseinrichtung (67), die die Abtastsignale in erste und zweite Abtastsignale sortiert, wobei die ersten Abtastsignale ein jeweiliges Ausgabesignal des Magnetkopfes (31) wiedergeben, welches erhalten wurde, während sich der Magnetkopf außerhalb des vorherbestimmten Bereichs befand, während die zweiten Abtastsignale ein jeweiliges Ausgabesignal des Magnetkopfes wiedergeben, welches erhalten wurde, während sich der Magnetkopf innerhalb des vorherbestimmten Bereichs befand,
eine Speichereinrichtung (67, 68), die auf die Unterscheidungseinrichtung anspricht und die ersten Abtastsignale speichert,
eine Subtraktionseinrichtung (67), die von jedem zweiten Signal ein jeweiliges erstes Signal subtrahiert, welches für einen gleichwertigen Zeitpunkt erhalten wurde, und
eine Ausgabeeinrichtung (67), die die von der Subtraktionseinrichtung erhaltenen Differenzen als ein Magnetmustererkennungssignal ausgibt.

7. Gerät nach Anspruch 6, bei dem die Abtasteinrichtung (62-64, 67) geeignet ist, die Abtastsignale zu mit den Antriebsimpulsen synchronisierten Zeitpunkten zu erhalten.

8. Gerät nach Anspruch 7, bei dem die Abtasteinrichtung (62-64, 67) eine Einrichtung umfaßt, die die Abtastsignale für eine vorherbestimmte erste Anzahl (i) der vorherbestimmten Zeitpunkte innerhalb und synchron mit jedem einer zweiten vorherbestimmten Anzahl (n) von Antriebsimpulsen erhält, wobei die zweite Anzahl Antriebsimpulse einen Antriebszyklus des Schrittmotors (45) entsprechend einer Periode periodischen magnetischen Rauschens entspricht, welches von dem Schrittmotor erzeugt wird.

9. Gerät nach Anspruch 8, bei dem
die Unterscheidungseinrichtung (67) eine Einrichtung aufweist, die aus jeder Gruppe einer vorherbestimmten dritten Anzahl aufeinanderfolgend erhaltener erster Abtastsignale einen jeweiligen ersten Durchschnittswert (Bₘₙᵢ) errechnet, sowie eine Einrichtung, die aus jeder Gruppe einer Anzahl aufeinanderfolgend erhaltener zweiter Abtastsignale entsprechend der dritten Anzahl einen jeweiligen zweiten Durchschnittswert (A/4) errechnet,
die Speichereinrichtung (67, 68) eine Einrichtung zum Speichern der ersten Durchschnittswerte ist, und
die Subtraktionseinrichtung (67) eine Einrichtung zum Subtrahieren des entsprechenden ersten Durchschnittswertes von jedem zweiten Durchschnittswert ist.

10. Gerät nach Anspruch 9, bei dem
die Abtasteinrichtung (62-64, 67) eine Einrichtung aufweist, die die ersten Abtastsignale für eine vorherbestimmte vierte Anzahl (m) der Antriebszyklen erhält,
die Unterscheidungseinrichtung eine Einrichtung aufweist, die die resultierenden ersten Durchschnittswerte zu einer Anzahl von Gruppen gruppiert, so daß jede Gruppe alle ersten Durchschnittswerte (B₁ₙᵢ-Bₘₙᵢ) umfaßt, die für die entsprechenden Zeitpunkte erhalten wurden, welche von den ersten Durchschnittswerten in jedem der Antriebszyklen repräsentiert werden, und die aus jeder Gruppe einen Mittenwert (B'ₙᵢ) auswählt, wobei der Mittenwert der Wert der höchsten Frequenz oder der Durchschnitt einer bestimmten Anzahl höchster Frequenzwerte in der Gruppe ist, und
die Subtraktionseinrichtung (67) eine Einrichtung ist, die von jedem zweiten Durchschnittswert den entsprechenden Mittenwert subtrahiert.

11. Vorrichtung, welche das Gerät nach einem der Ansprüche 6 bis 10 umfaßt und ferner eine Druckeinrichtung (13) aufweist, wobei die Antriebseinrichtung (23, 29, 45, 46, 47) auch zum Transport des Trägermediums (16) zu der Druckeinrichtung (13) dient und die Druckeinrichtung geeignet ist, das Trägermedium zu bedrucken.

## Revendications

1. Procédé de lecture de caractères ou de motifs similaires en encre magnétique, prévus dans une zone déterminée à l'avance sur un milieu support, le procédé comprenant les stades dans lesquels :
a) on applique des impulsions de commande à un moteur (45) à impulsions pour provoquer un mouvement de balayage du milieu support par rapport à une tête (31) magnétique,
b) on obtient et on mémorise, en tant que premiers signaux respectifs d'échantillonnage, le signal de sortie de la tête magnétique à des instants déterminés à l'avance pendant le mouvement de balayage, alors que la tête (31) magnétique est en dehors de la zone déterminée à l'avance,
c) on obtient ensuite, en tant que deuxièmes signaux respectifs d'échantillonnage, le signal de sortie de la tête magnétique à des instants déterminés à l'avance pendant le mouvement de balayage, alors que la tête (31 ) magnétique est à l'intérieur de la zone déterminée à l'avance, et
d) on soustrait de chaque deuxième signal d'échantillonnage obtenu au stade (c) le premier signal correspondant d'échantillonnage mémorisé au stade (b) et on sort les différences respectives en tant que signal de reconnaissance de motifs magnétiques.

2. Procédé suivant la revendication 1, dans lequel les instants déterminés à l'avance à la fois aux stades (b) et (c), sont synchronisés aux impulsions de commande.

3. Procédé suivant la revendication 2, dans lequel le stade (b) comprend l'obtention et la mémorisation des premiers signaux d'échantillonnage pendant un premier nombre (i) déterminé à l'avance des instants déterminés à l'avance dans chacun d'un deuxième nombre (n) déterminé à l'avance d'impulsions de commande, et en étant synchronisés avec celles-ci, le deuxième nombre d'impulsions de commande représentant un cycle de commande du moteur (45) à impulsions correspondant à une période du bruit magnétique périodique engendrée par le moteur à impulsions.

4. Procédé suivant la revendication 3, dans lequel le stade (b) comprend le calcul, à partir de chaque groupe, d'un troisième nombre déterminé à l'avance, de premiers signaux d'échantillonnage obtenus successivement, d'une première valeur (Bₘₙᵢ) moyenne respective et la mémorisation des premières valeurs moyennes au lieu des premiers signaux d'échantillonnage, le stade (c) comprend le calcul, à partir de chaque groupe d'un nombre de deuxièmes signaux d'échantillonnage obtenus successivement égal au troisième nombre, d'une deuxième valeur (A/4) moyenne respective, et le stade (d) consiste à soustraire de chaque deuxième valeur moyenne la première valeur moyenne correspondante et à sortir des différences respectives en tant que signal de reconnaissance de motifs magnétiques.

5. Procédé suivant la revendication 3 ou 4, dans lequel le stade (b) comprend l'obtention et la mémorisation des premiers signaux d'échantillonnage ou des valeurs moyennes pendant un quatrième nombre (m) déterminé à l'avance des cycles de commande, le regroupement des premiers signaux d'échantillonnage ainsi obtenus ou des premières valeurs moyennes ainsi obtenues en un nombre de groupes tel que chaque groupe comprenne tous les premiers signaux d'échantillonnage obtenus pendant des instants correspondant dans chacun des cycles de commande ou toutes les premières valeurs (B₁ₙᵢ à Bₘₙᵢ) obtenues pendant les instants correspondant représentées par les premières valeurs moyennes dans chacun des cycles de commande, et la sélection à partir de chaque groupe d'une valeur centrale, la valeur centrale étant la valeur ayant la fréquence la plus grande ou la moyenne d'un certain nombre de valeur de fréquence la plus grande du groupe, et le stade (d) consiste à soustraire de chaque deuxième signal d'échantillonnage ou de chaque deuxième valeur moyenne la valeur centrale correspondante.

6. Dispositif pour effectuer le procédé défini dans l'une quelconque des revendications précédentes, comprenant :
une tête (31) magnétique,
des moyens (23, 29, 45, 46, 47) de commande pour déplacer un milieu (16) support par rapport à la tête magnétique, le milieu support portant des caractères ou des motifs similaires en encre magnétique dans une zone déterminée à l'avance et les moyens de commande ayant un moteur (45) à impulsions comme source d'entraînement,
des moyens (66, 67) pour appliquer des impulsions d'entraînement au moteur (45) à impulsions,
des moyens (62-64, 67) d'échantillonnage, pour obtenir, en tant que signaux d'échantillonnage, le signal de sortie de la tête (31) magnétique à des instants déterminés à l'avance,
des moyens (67) de discrimination pour classer les signaux d'échantillonnage en des premiers et des deuxièmes signaux d'échantillonnage, les premiers signaux d'échantillonnage représentant un signal respectif de sortie de la tête (31) magnétique obtenu alors que la tête magnétique est en dehors de la zone déterminée à l'avance, tandis que les deuxièmes signaux d'échantillonnage représentent un signal respectif de sortie de la tête magnétique obtenu alors que la tête magnétique est à l'intérieur de la zone déterminée à l'avance,
des moyens (67, 68) de mémorisation, réagissant aux moyens de discrimination pour mémoriser les premiers signaux d'échantillonnage,
des moyens (67) pour soustraire de chaque deuxième signal un premier signal respectif d'échantillonnage obtenu pendant un instant équivalent, et
des moyens (67) de sortie des différences obtenues, dans les moyens de soustraction, en tant que signal de reconnaissance de motifs magnétiques.

7. Dispositif suivant la revendication 6, dans lequel les moyens (62-64, 67) d'échantillonnage sont conçus pour obtenir des signaux d'échantillonnage à des instants synchronisés avec les impulsions de commande.

8. Dispositif suivant la revendication 7, dans lequel les moyens (62-64, 67) d'échantillonnage comprennent des moyens pour obtenir les signaux d'échantillonnage pendant un premier nombre (i) déterminé à l'avance des instants déterminés à l'avance dans chacun d'un deuxième nombre (n) déterminé à l'avance d'impulsions de commande et synchronisés avec celles-ci, le deuxième nombre d'impulsions de commande représentant un cycle de commande du moteur (45) à impulsions correspondant à une période du bruit magnétique périodique engendré par le moteur à impulsions.

9. Dispositif suivant la revendication 8, dans lequel
les moyens (67) de discrimination comprennent des moyens pour calculer, à partir de chaque groupe d'un troisième nombre déterminé à l'avance de premiers signaux d'échantillonnage obtenus successivement, une première valeur (Bₘₙᵢ) moyenne respective et des moyens pour calculer, à partir de chaque groupe d'un nombre de deuxièmes signaux d'échantillonnage obtenus successivement égal au troisième nombre, une deuxième valeur (A/4) moyenne respective,
les moyens (67, 68) de mémorisation sont des moyens de mémorisation des premières valeurs moyennes,
les moyens (67) de soustraction sont des moyens pour soustraire de chaque deuxième valeur moyenne la première valeur moyenne correspondante.

10. Dispositif suivant la revendication 9, dans lequel
les moyens (62-64, 67) d'échantillonnage comprennent des moyens d'obtention des premiers signaux d'échantillonnage pendant un quatrième nombre (m) déterminé à l'avance des cycles de commande,
les moyens de discrimination comprennent des moyens pour regrouper les premières valeurs moyennes obtenues en un certain nombre de groupes de façon à ce que chaque groupe comprennent toutes les premières valeurs (B₁ₙᵢ à Bₘₙᵢ) moyennes obtenues pendant les instants correspondant représentées par les premières valeurs moyennes dans chacun des cycles de commande et pour sélectionner dans chaque groupe une valeur (B'ₙᵢ) centrale, la valeur centrale étant la valeur de fréquence la plus grande ou la moyenne d'un certain nombre de valeurs de fréquence les plus grandes du groupe, et
les moyens (67) de soustraction sont des moyens pour soustraire de chaque deuxième valeur moyenne la valeur centrale correspondante.

11. Dispositif suivant l'une quelconque des revendications 6 à 10, et comprenant en outre, des moyens (13) d'impression, les moyens (23, 29, 45, 46, 47) de commande étant aussi conçus pour transporter le milieu (16) support vers les moyens (13) d'impression et les moyens d'impression étant conçus pour imprimer sur le milieu support.
